# EUROPÄISCHE PATENTANMELDUNG

(11) **EP 1 845 313 A1**
(43) Veröffentlichungstag der Anmeldung: **17.10.2007**
(21) Anmeldenummer: 07006630.3
(22) Anmeldetag: 30.03.2007
(51) Int. Cl.: F24D 11/02

(54) **Wärmespeicheranlage**

(30) Priorität: 12.04.2006 DE 102006017198
(71) Anmelder: Kiefer, Joachim, 79189 Bad Krozingen (DE)
(72) Erfinder: Kiefer, Joachim, 79189 Bad Krozingen (DE)
(74) Vertreter: Zimmermann, Günter

(57) **Zusammenfassung**

Um bei einer Wärmespeicheranlage mit einem Wärmespeicher (1), einer Wärmepumpe (2) mit Verdampfer (3) und Verdichter (4), einem ersten ansteuerbaren Kreislauf (6) für einen ersten Temperaturbereich, welcher eine Wärmequelle (7) mit dem Wärmespeicher (1) direkt verbindet, und einem zweiten ansteuerbaren Kreislauf (13) für einen zweiten Temperaturbereich, welcher die Wärmequelle (7) mit dem Wärmespeicher (1) über die Wärmepumpe (2) verbindet, eine effiziente Energieausbeute zu erzielen, ist eine zuschaltbare Beimischleitung (14) vorgesehen, welche vor dem Verdampfer (3) mit dem zweiten Kreislauf (13) strömungsmäßig derart verbindbar ist, dass ein dritter ansteuerbarer Kreislauf (18) für einen dritten Temperaturbereich entsteht und die verschiedenen Kreisläufe (6,13,18) mit verschiedenen Wärmequellen (7) für die drei Temperaturbereiche verbindbar sind.

## Beschreibung

Die Erfindung bezieht sich auf eine Wärmespeicheranlage mit einem Wärmespeicher, einer Wärmepumpe mit Verdampfer und Verdichter, einem ersten ansteuerbaren Kreislauf für einen ersten Temperaturbereich, welcher eine Wärmequelle mit dem Wärmespeicher direkt verbindet, und einem zweiten ansteuerbaren Kreislauf für einen zweiten Temperaturbereich, welcher die Wärmequelle mit dem Wärmespeicher über die Wärmepumpe verbindet.

Eine derartige Wärmespeicheranlage ist durch die EP 0 887 602 A1 bekannt. Als Wärmequelle dient die Sonnenenergie, wobei ein Sonnenkollektorkreis direkt mit einem Verbraucherkreis thermisch gekoppelt ist, wenn die aufgenommene Wärme ausreicht, um den Verbraucherkreis direkt zu beheizen. Dabei wird die Wärmepumpe überbrückt. Nimmt die Temperatur am Sonnenkollektor ab, dann wird auf einen zweiten Kreislauf und damit auf eine Nutzung der Sonnenenergie über die Wärmepumpe umgeschaltet. Bei Wärmepumpen in der Haustechnik werden Eingangstemperaturen bis etwa 25°C verarbeitet. Um die Wärmepumpe durch höher temperierte Wärmeträgermedien nicht zu beschädigen, wird die Wärmepumpe bei Erreichen der zulässigen Höchsttemperatur abgeschaltet. Nachteiligerweise wird somit nicht die gesamte zur Verfügung stehende Energie ausgenutzt, sondern es wird nur die Energie auf der Verdampferseite bis etwa 25°C verwendet.

Die Aufgabe der Erfindung wird somit darin gesehen, die Wärmespeicheranlage der eingangs genannten Art derart weiter zu entwickeln, dass eine effiziente Energieausbeute erzielt wird.

Zur Lösung dieser Aufgabe wird bei einer Wärmespeicheranlage gemäß dem Oberbegriff des Anspruchs 1 erfindungsgemäß vorgeschlagen, dass eine zuschaltbare Beimischleitung vorgesehen ist, welche vor dem Verdampfer mit dem zweiten Kreislauf strömungsmäßig derart verbindbar ist, dass ein dritter ansteuerbarer Kreislauf für einen dritten Temperaturbereich entsteht und die verschiedenen Kreisläufe mit verschiedenen Wärmequellen für die drei Temperaturbereiche verbindbar sind.

Durch die Beimischleitung wird dem von der Wärmequelle kommenden Wärmeträgermedium ein kälteres Medium in solchen Mengen beigemischt, dass das gemischte Medium eine Temperatur aufweist, die den Verdampfer nicht mehr gefährdet. Somit kann nun auch ein Temperaturbereich der Wärmequelle ausgenutzt werden, bei welchem die Wärmepumpe bei der bekannten Anlage aus Sicherheitsgründen abgeschaltet hätte. Insgesamt wird damit eine effiziente Energieausbeute erreicht. Zusätzlich kann die erfindungsgemäße Wärmespeicheranlage in einfacher Weise gegen eine herkömmliche Wärmepumpe ausgetauscht werden, da sie für den Betrieb nur zwei Anschlüsse für die Wärmequelle und zwei Anschlüsse für den Wärmespeicher benötigt. Ein weiterer wesentlicher Vorteil der erfindungsgemäßen Wärmespeicheranlage ist, dass jede beliebige Wärmequelle wie Grundwasser, Umgebungsluft, eine Heizanlage oder ein Sonnenkollektor problemlos angeschlossen werden kann. Über die drei Kreisläufe mit den drei verschiedenen Temperaturbereichen kann jede Wärmequelle effizient ausgenutzt werden.

Die Beimischleitung kann das Medium von einem externen Ort her zuführen. Eine kompaktere Anlage ergibt sich jedoch, wenn gemäß einer Ausführungsform der Erfindung die Beimischleitung vor und hinter dem Verdampfer mit dem zweiten Kreislauf verbunden ist. Bei dieser Ausführungsform wird das abgekühlte Wärmeträgermedium nach dem Verdampfer teilweise in die Beimischleitung abgezweigt und vor dem Verdampfer dem von der Wärmequelle kommenden warmen Wärmeträgermedium zugeführt.

Vorteilhafterweise liegt der zweite Temperaturbereich zwischen 5°C und 25°C, der dritte Temperaturbereich zwischen 25°C und einer Temperatur, welche niederer ist als die des Wärmespeichers, und der erste Temperaturbereich liegt oberhalb der Temperatur des Wärmespeichers.

Die Schaltung zwischen den einzelnen Kreisläufen erfolgt zweckmäßigerweise über Zweiwegeventile und/oder Dreiwegeventile und/oder Vierwegeventile und als Wärmeträgermedium wird Wasser oder Luft oder Öl oder ein ähnlich vergleichbares Medium benutzt.

Die Erfindung wird nachstehend anhand der Zeichnung erläutert. Die Zeichnung zeigt ein Ausführungsbeispiel der Erfindung. Hierbei stellen dar:
Fig. 1 eine schematische Darstellung der Wärmespeicheranlage, wobei die hervorgehobenen Linien den ersten Kreislauf zeigen,
Fig. 2 eine Darstellung gemäß Fig. 1, wobei die hervorgehobenen Linien den zweiten Kreislauf zeigen und
Fig. 3 eine Darstellung gemäß Fig. 1, wobei die hervorgehobenen Linien den dritten Kreislauf zeigen.

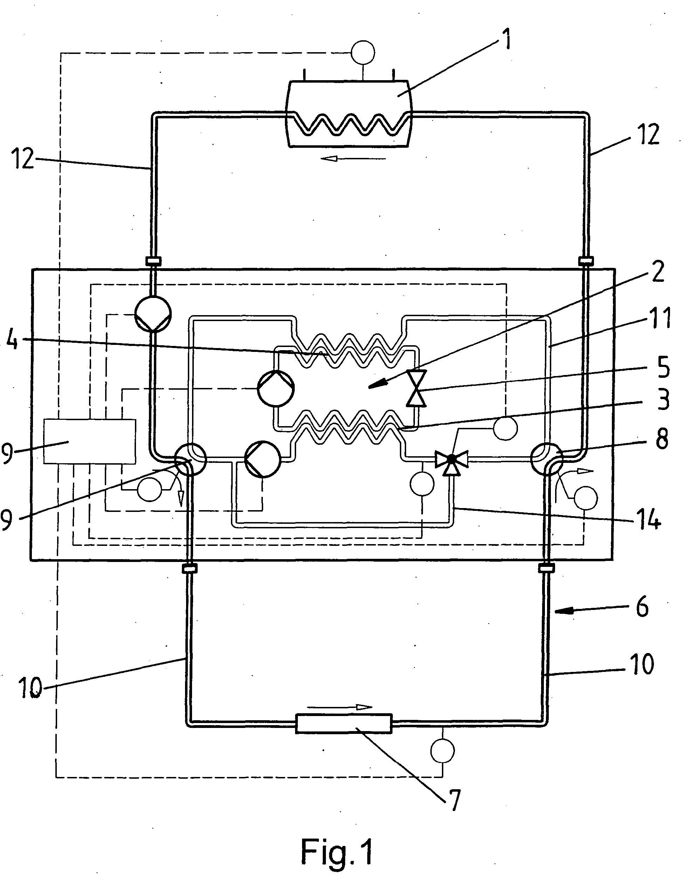

Die Wärmespeicheranlage weist einen Wärmespeicher 1, eine Wärmepumpe 2 mit einem Verdampfer 3, einem Verdichter 4 und einem Expansionsventil 5 auf. Fig.1 zeigt anhand der stark hervorgehobenen Linien einen ersten Kreislauf 6 für einen ersten Temperaturbereich, welcher mit einer Wärmequelle 7 verbunden ist. In der Anlage sind Ventile 8, 9 vorgesehen, welche die Wärmequellenleitung 10 mit der Wärmepumpenleitung 11 oder der Wärmespeicherleitung 12 verbinden können. Die Ventile 8, 9 sind bei dem Kreislauf 6 so geschaltet, dass eine direkte Verbindung zwischen der Wärmequelle 7 und dem Wärmespeicher 1 entsteht. Die Wärmequellenleitung 10 und die Wärmespeicherleitung 12 bilden den Kreislauf 6. Die Wärmepumpe 2 ist somit ausgeschaltet. Dieser Kreislauf 6 wird bei einem Sonnenkollektor als Wärmequelle 7 verwendet, wobei die Temperatur des von der Wärmequelle 7 kommenden Wärmeträgermediums höher ist als die Temperatur des Wärmespeichers 1.

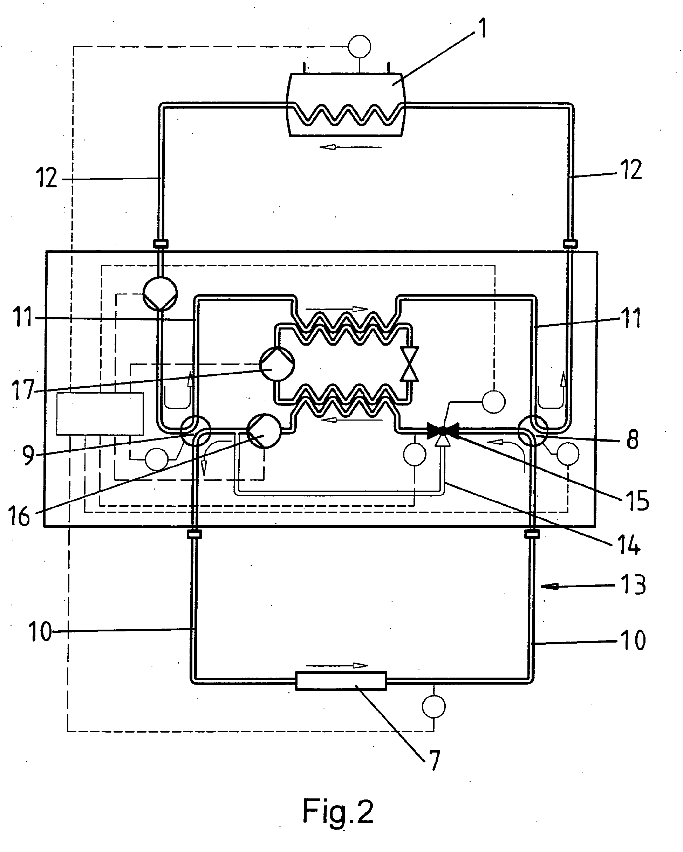

Wie aus Fig. 2 ersichtlich, sind hier die Ventile 8, 9 so geschaltet, dass die Wärmepumpe 2 mit ihrer Wärmepumpenleitung 11 zugeschaltet ist und keine direkte Verbindung mehr zwischen der Wärmequelle 7 und dem Wärmespeicher 1 besteht. Es sind nun die Wärmequellenleitung 10, die Wärmepumpenleitung 11 und die Wärmespeicherleitung 12 hintereinander geschaltet. Diese Schaltung entspricht einem zweiten Kreislauf 13 für einen zweiten Temperaturbereich, bei welchem die Wärmequelle 7 eine Temperatur zwischen 5°C und 25°C hat. Als Wärmequelle 7 in diesem Temperaturbereich sind Umgebungsluft, Wasser aus Seen, Flüssen oder Grundwasser, oder Erdwärme geeignet. Das erwärmte Medium gelangt von der Wärmequelle 7 direkt in den Verdampfer 3. Eine Beimischleitung 14, welche parallel zu dem Verdampfer 3 geschaltet ist, ist durch ein vor dem Verdampfer 3 angeordnetes Ventil 15 gesperrt. Kaltes Wärmeträgermedium, welches sich in der Beimischleitung 14 befindet, wird bei diesem Kreislauf dem von der Wärmequelle 7 kommenden warmen Wärmeträgermedium nicht beigemischt. Der Kreislauf des Mediums aus der Wärmequelle 7 wird durch eine Pumpe 16 gefördert. Das durch die Wärmepumpe 2 auf ein höheres Wärmeniveau gebrachte Medium wird am Verdichter 4 mittels einer Pumpe 17 zu dem Wärmespeicher 1 befördert. Hier wird die Wärme über einen Wärmetauscher an den Wärmespeicher 1 abgegeben.

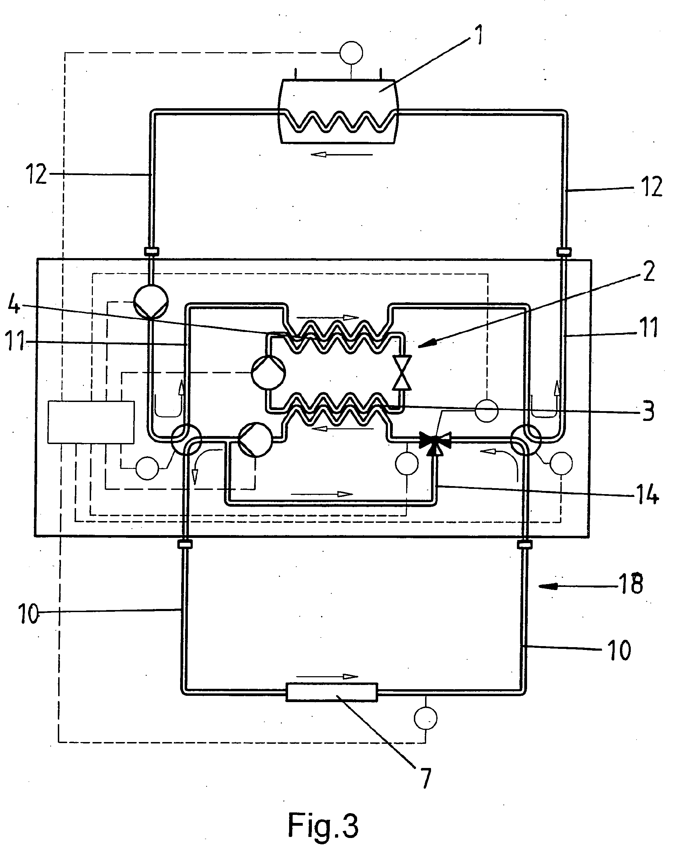

Bei dem in Fig. 3 dargestellten dritten Kreislauf 18 für einen dritten Temperaturbereich hat die Wärmequelle eine Temperatur zwischen 25°C und einer Temperatur, welche niederer ist als die Temperatur des Wärmespeichers 1. Bei herkömmlichen Wärmepumpen würde nun die Wärmepumpe abgeschaltet werden, um ein Zerstören der Wärmepumpe zu verhindern. Bei der erfindungsgemäßen Wärmespeicheranlage wird nun über die Beimischleitung 14 bei geöffnetem Ventil 15 solange kälteres Medium mit dem von der Wärmequelle 7 kommenden warmen Wärmeträgermedium gemischt, bis an der Einlaufseite des Verdampfers 3 ein gemischtes Medium mit einer maximalen Temperatur von etwa 25°C entsteht. Durch dieses Vermischen des Mediums über die Beimischleitung 14 kann die gesamte Wärmemenge aus der Wärmequelle 7 auch mit einer höheren Temperatur als 25°C genutzt werden. Bei dem dritten Kreislauf 18 sind die Wärmequellenleitung 10, die Wärmepumpenleitung 11 und die Wärmespeicherleitung 12 hintereinander geschaltet und die Beimischleitung 14 ist parallel zur Wärmepumpenleitung 11 vor und hinter dem Verdampfer 3 geschaltet. Alle drei Kreisläufe 6, 13, 18 und die Schaltung der entsprechenden Ventile 8, 9 werden durch eine Steuerung 19 gesteuert.

Die erfindungsgemäße Wärmespeicheranlage nutzt somit den gesamten von den verschiedenen Wärmequellen zur Verfügung gestellten Energiebereich, sodass eine effiziente Energieausbeute erzielt wird. Die erfindungsgemäße Anlage kann in einfacher Weise gegen eine herkömmliche Wärmepumpe ausgetauscht werden, wobei nur die Wärmequelle 1 und der Wärmespeicher 7 neu angeschlossen werden müssen.

## Patentansprüche

1. Wärmespeicheranlage mit einem Wärmespeicher (1), einer Wärmepumpe (2) mit Verdampfer (3) und Verdichter (4), einem ersten ansteuerbaren Kreislauf (6) für einen ersten Temperaturbereich, welcher eine Wärmequelle (7) mit dem Wärmespeicher (1) direkt verbindet, und einem zweiten ansteuerbaren Kreislauf (13) für einen zweiten Temperaturbereich, welcher die Wärmequelle (7) mit dem Wärmespeicher (1) über die Wärmepumpe (2) verbindet,
**dadurch gekennzeichnet,**
**dass** eine zuschaltbare Beimischleitung (14) vorgesehen ist, welche vor dem Verdampfer (3) mit dem zweiten Kreislauf (13) strömungsmäßig derart verbindbar ist, dass ein dritter ansteuerbarer Kreislauf (18) für einen dritten Temperaturbereich entsteht und die verschiedenen Kreisläufe (6,13,18) mit verschiedenen Wärmequellen (7) für die drei Temperaturbereiche verbindbar sind.

2. Anlage nach Anspruch1,
**dadurch gekennzeichnet,**
**dass** die Beimischleitung (14) vor und hinter dem Verdampfer (3) mit dem zweiten Kreislauf (13) verbunden ist.

3. Anlage nach Anspruch 1 oder 2,
**dadurch gekennzeichnet,**
**dass** der zweite Temperaturbereich zwischen 5°C und 25°C liegt.

4. Anlage nach einem der vorhergehenden Ansprüche,
**dadurch gekennzeichnet,**
**dass** der dritte Temperaturbereich zwischen 25°C und einer Temperatur niederer derjenigen des Wärmespeichers (1) liegt.

5. Anlage nach einem der vorgehenden Ansprüche,
**dadurch gekennzeichnet,**
**dass** der erste Temperaturbereich oberhalb der Temperatur des Wärmespeichers (1) beginnt.

6. Anlage nach einem der vorhergehenden Ansprüche,
**dadurch gekennzeichnet,**
**dass** die Kreisläufe (6,13,18) über Zweiwegeventile und/oder Dreiwegeventile und/oder Vierwegeventile verbunden sind.

7. Anlage nach einem der vorhergehenden Ansprüche,
**dadurch gekennzeichnet,**
**dass** das Wärmeträgermedium in den Kreisläufen (6,13,18) Wasser oder Luft oder Öl ist.
